Europäisches Patentamt

European Patent Office

Office européen des brevets

(19)

(11) Veröffentlichungsnummer: **0 083 429**
**A1**

(12) ## EUROPÄISCHE PATENTANMELDUNG

(21) Anmeldenummer: 82111581.3

(22) Anmeldetag: 14.12.82

(51) Int. Cl.³: **A 47 J 37/12**

(30) Priorität: 22.12.81 CH 8221/81

(43) Veröffentlichungstag der Anmeldung: **13.07.83**
**Patentblatt 83/28**

(84) Benannte Vertragsstaaten: **AT BE CH DE FR GB IT LI NL SE**

(71) Anmelder: **NIRO PLAN AG, Baarerstrasse 59, CH-6300 Zug (CH)**

(72) Erfinder: **Weber, Hans Rudolf, Oberholzweg 43, D-4852 Rothrist (CH)**

(74) Vertreter: **Troesch, Hans Alfred, Dr. Ing. et al, Walchestrasse 19, CH-8035 Zürich (CH)**

(54) **Friteuse.**

(57) Es soll ein bezüglich Temperatur in der Behandlungszone weitgehend ausgeglichenes Ölbad und damit die Verhütung örtlicher Überhitzungen beim Fritieren erreicht werden. Bei einer solchen Friteuse erhitzt man ein in einem Kreislauf (19) befindliches Medium. Dieses Medium wiederum wird als Wärmequelle für das Erhitzen des Öls verwendet. Dabei wird dieses Medium auf Siedebedingungen gehalten. Das Medium wird mittels Gasbrennern (36), z.B. mittels Rauchgas (43) indirekt erhitzt.

EP 0 083 429 A1

- 1 -

Friteuse

Die vorliegende Erfindung betrifft eine Friteuse, bei welcher ein in einem Kreislauf befindliches Medium erhitzt und dieses Medium als Wärmequelle für das Erhitzen des Oels verwendet wird.

Es ist ein Verfahren zum Braten von Lebensmitteln und eine Friteuse zur Durchführung des Verfahrens bekannt geworden (z.B. DE-OS 2 443 156), wobei, wie üblich, das Fritieröl auf direkte Art erhitzt wird, beispielsweise mittels elektrischer Heizstäbe, welche in das Oel eintauchen oder durch Gasbrenner, wobei der Blechtrog, in dem sich das Oel befindet, durch die Brenngase erhitzt wird.

Die Prozesswärme wird hier von der Wärmequelle über Lamellen oder ähnliche heizflächenvergrössernde Vorrichtungen über die Oelbehälterwände in das Oel gebracht.

Dieses bekannte Verfahren basiert auf der sog. direkten Erhitzung des Oels, was zu örtlichen Ueberhitzungen des Oels führen kann. Es sind insbesondere Temperaturspitzen, welche das Oel ausserordentlich schnell altern lassen und dieses für das Fritieren ungeeignet machen.

Die vorliegende Erfindung verhindert örtliche Ueberhitzungen des Oels.

Die erfindungsgemässe Friteuse, welche dieses Problem löst, zeichnet sich dadurch aus, dass der Kreislauf einen elektrisch oder gasbeheizten ersten Wärmeaustauscher und einen diese Energie an das Oel abgebenden zweiten Wärmeaustauscher aufweist, welche beiden Wärmeaustauscher durch mindestens eine Steig- und eine Rückflussrohrleitung miteinander verbunden sind.

Die Erfindung wird anschliessend beispielsweise anhand einer Zeichnung erläutert.

Es zeigen in rein schematischen Darstellungen:

Fig. 1    einen Schnitt durch eine doppelkammerige Friteuse nach Schnittlinie I - I der Fig. 2,

Fig. 2    eine Aufsicht auf die Friteuse nach Fig. 1, mit geöffnetem Deckel, weggehobenen Körben und Lochboden sowie entferntem Strömungseinsatz,

Fig. 3    einen Teilschnitt durch die Friteuse nach Fig. 1, gemäss Schnittlinie III - III,

Fig. 4    eine Variante einer Friteuse analog der Darstellung nach Fig. 1,

Fig. 5    einen Ausschnitt aus der Aufsicht der Friteuse nach Fig. 4, analog der Darstellung nach Fig. 2,

Fig. 6    ein Rohrsystem eines direkt beheizten Uebertragungs-Mediumskreislaufs.

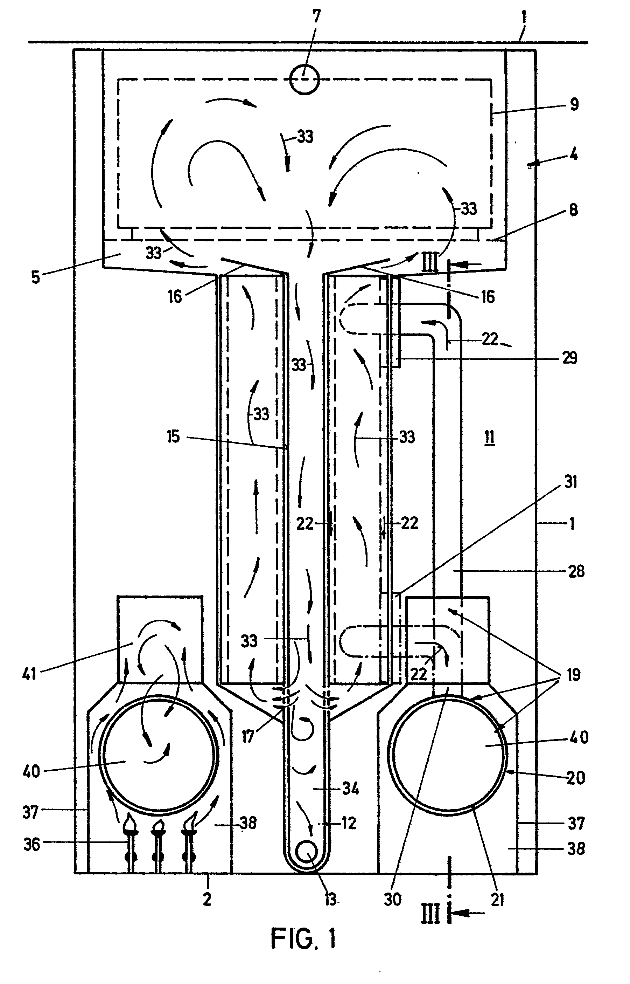

In Fig. 1 sind Gehäusewand- und -deckelteile 1 einer Friteuse ersichtlich sowie ein Zwischenboden 2. Der eigentliche Friteusebehälter 4 weist ein Fritierbecken 5 mit einer Oelüberlauföffnung 7 sowie einem eingelegten Siebboden 8 auf. Auf diesem werden ein oder mehrere Beladungskörbe 9 mit dem zu fritierenden Nahrungsmittel (Fleisch, Kartoffeln o.dgl.) eingebracht. Unter dem Fritierbecken 5 befindet sich eine Wärmetauschzone 11, der sich eine Kaltölwanne 12 mit einer Oelablauföffnung 13 anschliesst. Ein U-förmiger Strömungseinsatz 15 erleichtert das Erreichen einer gerichteten Strömung des umlaufenden Oels. Diesem Zecke dienen ebenfalls obere Leitbleche 16 des Einsatzes 15 sowie über der Kaltölwanne 12 vorgesehene seitliche Zirkulationsöffnungen 17. Die Friteuse ist bezüglich ihrer vertikalen Mittelebene symmetrisch gebaut. Zwecks Uebersichtlichkeit sind die beiden Hälften nicht vollständig gleich wiedergegeben.

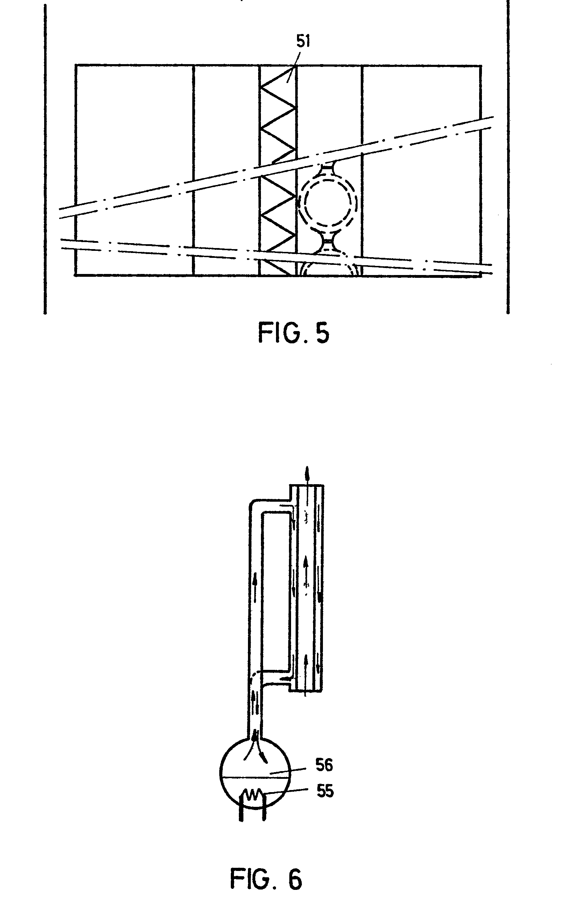

Der Erwärmung des Oels dient ein Uebertragungsmediumskreislauf 19 mit je einem Doppelmantelrohr 20, dessen zwei Rohre einen Mantelraum 21 festlegen. Dieser Mantelraum 21 dient der Aufnahme eines Uebertragungsmediums, welches beispielsweise eine siedende Flüssigkeit sein kann. Die horizontalen Doppelmantelrohre 20 sind mithin als Verdampfer ausgebildet, ebenso das einfache Horizontalrohr in der Ausführung gemäss Fig. 6, welches später erläutert wird. Deren Siedepunkt liegt bei normalem Aussendruck, d.h. ca. einem bar, etwas über der zu erreichenden Oeltemperatur. Es ist indessen auch möglich, Wasser zu verwenden. Dies bedingt aber, den Mantelraum 21 unter entsprechendem Sattdampfungsdruck (z.B. 10 atü) zu halten, was bauseits zusätzliche Verstärkungen verlangt. Als Uebertragungsmedium kommen beispielsweise höhere ein- oder mehrwertige Alkohole oder ähnliche ungiftige Medien in Frage. Mediumspfeile 22 zeigen an, wo dieses dampfförmige bzw. flüssige Medium durchstreicht. Das Medium erwärmt eine Rohrbank oder -batterie 23, welche durch Stege 25 miteinander verbundene Doppelmantel-Austauschrohre 24 aufweist. Wie aus den Fig. hervorgeht, handelt es sich bei der Rohrbank 23 um mehrere parallelgeschaltete, vertikal angeordnete Doppelmantel-Austauschrohre 24. Das Uebertragungsmedium streicht auch hier durch entsprechende Mantelräume 26 der Austauschrohre 24 von oben nach unten. Zum Kreislauf 19 gehört ferner eine Steigleitung 28, welche vom liegenden Mantelraum 21 über eine Flanschverbindung 29 in die Mantelräume 26 der stehenden parallelgeschalteten Austauschrohre 24 führt. Aus diesen Rohren führt eine Rückflussleitung 30 über eine Flanschverbindung 31 zurück in den Mantelraum 21.

Es ist ferner ein Oelkreislauf mittels Pfeilen 33 dargestellt. In der Kaltölwanne 12 bildet sich ein Kaltölsumpf 34, der praktisch nicht am Oelkreislauf teilnimmt.

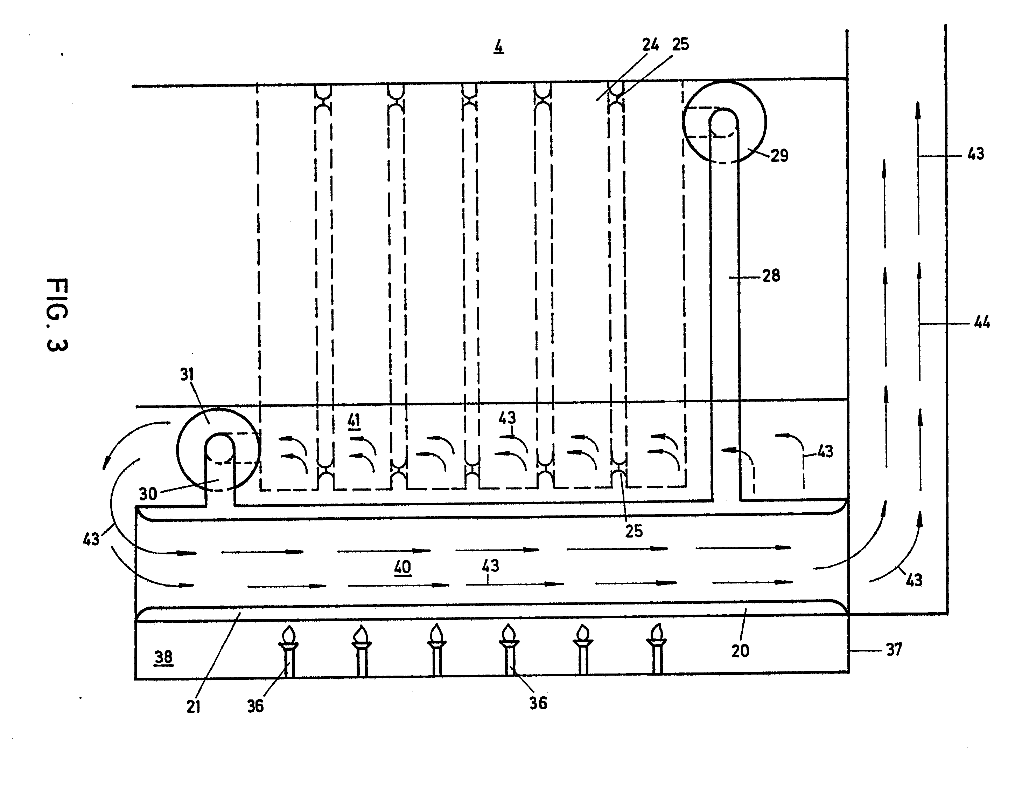

Als Energiequelle sind Gasbrenner 36 vorgesehen, deren Brenngase durch einen Feuerraum 38 um die liegenden Doppelmantelrohre 20 streichen und oben aus der Rauchgaskammer 41 seitlich abströmen, wie dies Fig. 3 zeigt, um vorn in den Rauchgas-Innenrohrraum 40 zu gelangen. Rauchgaspfeile 43 zeigen den Weg dieser Gase, welche am Ende in einen Rauchgasabzug 44 und von dort in den Kamin (nicht dargestellt) gelangen.

Der im System, d.h. Verdampfer, Verbindungsrohren und Kondensator, herrschende Druck entspricht dem direkt von der herrschenden Temperatur abhängigen Sattdampfdruck, da das System sofort nach dem Einfüllen des Wärmeträgermediums evakuiert und darauf fest verschlossen wird.

Diese Friteuse wird durch Anzünden der Gasbrenner 36 in der Brennkammer 37 in Betrieb genommen, wobei die heissen Brenngase das Uebertragungsmedium im Doppelmantelrohr 20 bis auf dessen Siedetemperatur erhitzen, die beispielsweise mittels eines Pressostaten durch Halten des Innendruckes (Sattdampfdruck) gewählt werden kann. Dann verdampft die Flüssigkeit und der Dampf steigt durch die Steigleitung 28, um in die Mantelräume 26 der Austauschrohre 24 zu gelangen. Hier gibt er seine Wärme an das die Rohre 24 umgebende Oel ab, kondensiert und gelangt über die Rückflussleitung 30 wiederum in den Mantelraum 21. Das sich erwärmende Oel, aufgrund der Siphonwirkung in und um die Austauschrohre 24 strömend, bewegt sich, wie die Pfeile 33 zeigen, nach oben und sorgt für eine gute Durchmischung und damit eine gleichmässige Temperatur im Fritierbecken 5. Dieses Oel gelangt dann von oben in den Strömungseinsatz 15 und verlässt diesen durch die Zirkulationsöffnungen 17. Allfällige Verunreinigungen, Nahrungsmittelreste u.dgl., fallen nach unten in den Kaltölsumpf 34, der durch die Oel-Ablauföffnung 13 von Zeit zu Zeit entleert werden kann, ohne dass das ganze Oel gewechselt werden muss.

Damit sind dem Fritieröl eindeutige Strömungswege gegeben. Zwischen den beiden U-Schenkeln strömt das kältere Oel nach unten, fliesst durch die Zirkulationsöffnungen auf die ausserhalb des U liegenden Heizflächen des Kondensators, wird durch diesen aufgeheizt, steigt nach oben und wird durch das abgewinkelte Blechende derart abgelenkt, dass im Fritierbereich eine gute Durchströmung und damit möglichst gleichmässige Temperatur-Verteilung erreicht wird.

Da der Druck im Mantelraum 21 und im ganzen Uebertragungsmediumskreislauf 19 konstant gehalten wird und den Sattdampfdruck des Uebertragungsmediums darstellt, wird damit eine Konstanthaltung der Temperatur dieses Mediums gesichert, dessen Verdampfungswärme dem Aufheizen des Oels dient. Damit ist auch sichergestellt, dass das Oel an keiner Stelle die Siedetemperatur des Uebertragungsmediums übersteigen kann. Oertliche Ueberhitzungen des Oels sind daher ausgeschlossen.

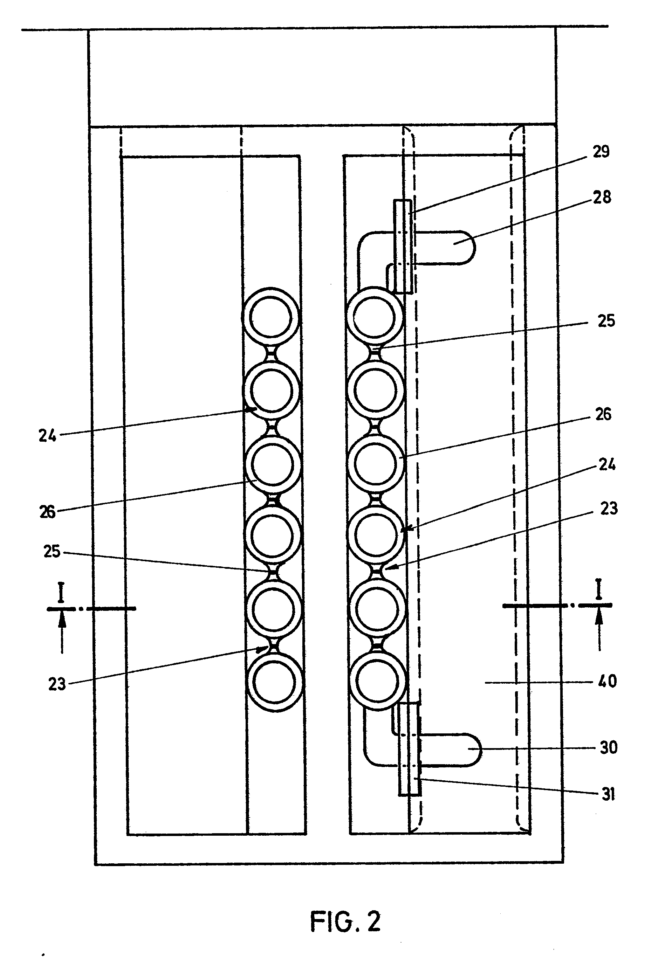

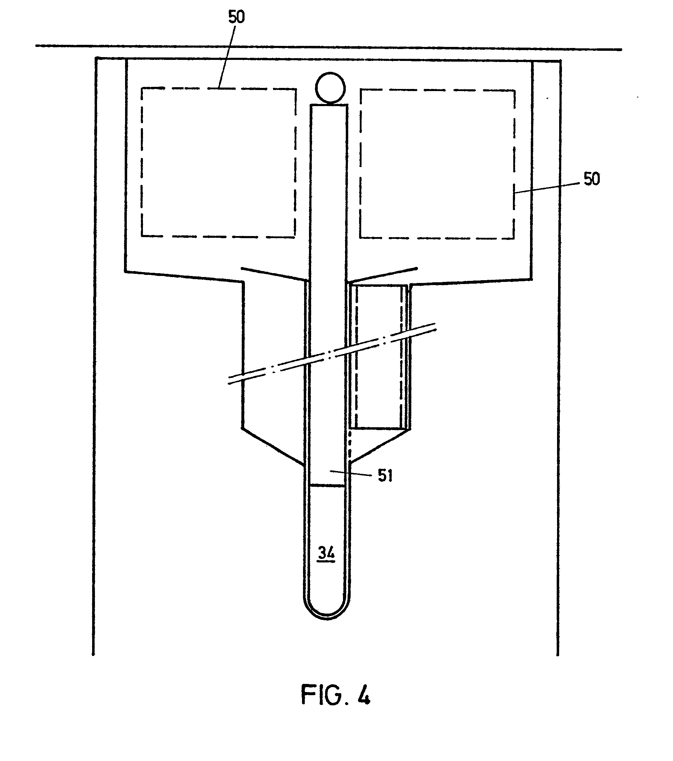

Die Fig. 4 und 5 zeigen eine im Aufbau ähnliche Friteuse wie die Fig. 1 bis 3, wobei aber ein in den Strömungseinsatz 15 eingebrachtes Trennblech 51 die Friteuse praktisch in zwei symmetrische Teile teilt, was erlaubt, die Kapazität auf die Hälfte zu verringern, wozu auch eine Unterteilung der Beladungskörbe 50 vorgesehen ist. Das Trennblech 51 endet im Kaltölsumpf 34, welcher die beiden Fritierseiten voneinander trennt.

Die Anwendung gestattet bei Bedarf eine Unterteilung eines doppelten Behälters in zwei voneinander fast temperatur-unabhängige Fritierabteile.

Während die Ausführung gemäss den Fig. 1 bis 5 eine

Wärmeübertragung von der Heizquelle in Form von
Gasbrennern 36 über das Aussenrohr des Doppelmantelrohres 20 vorsieht, ist es im Sinne der Fig. 6
auch möglich, das Uebertragungsmedium 56 mit einer
Heizschlange 55, beispielsweise elektrisch oder
mit Dampf, zu heizen. Im übrigen arbeitet diese
Friteuse wie beschrieben.

Normalerweise beträgt die Oeltemperatur zwischen
150°C und 200°C, vorzugsweise liegt sie bei
180°C.

Es ist natürlich auch möglich, die Austauschrohre
der ölheizenden Rohrbänke als Einfachrohre auszuführen.

Diese Erfindung bringt folgende Vorteile:

Die Oelbeheizungsflächen weisen durchwegs dieselbe
Oberflächentemperatur auf. Oertliche Temperaturspitzen, wie sie bei direktbeheizten Systemen immer
auftreten, sind in diesem Falle unmöglich.

Die maximalen, ölseitigen Oberflächentemperaturen
lassen sich mit einem, vom Wärmeträgermedium-Druck oder
Temperatur abhängigen Regelsystem leicht kontrollieren.

Infolge der separaten, vertikalen Anordnung der Oelbeheizungsflächen kann eine wesentlich grössere
Heizfläche als nur mit den Behälterwänden allein
erreicht werden.

Mit dem zusätzlichen Einbau des U-förmigen Strömungsleitbleches werden zudem die Oelströmungswege genau

definiert: Kaltölstrom abwärts, Warmölstrom aufwärts.

Alle diese Punkte haben das Ziel, die Oelheizflächen-
Temperatur, die notwendige Temperaturdifferenz und
damit die Oeltempertur (auch örtlich) möglichst klein
zu halten und damit das Oel zu schonen.

0083429

- 1 -

Patentansprüche:

1. Friteuse, bei welcher ein in einem Kreislauf befindliches Medium erhitzt und dieses Medium als Wärmequelle für das Erhitzen des Oels verwendet wird, dadurch gekennzeichnet, dass der Kreislauf einen elektrisch oder gasbeheizten ersten Wärmeaustauscher und einen diese Energie an das Oel abgebenden zweiten Wärmeaustauscher aufweist, welche beiden Wärmeaustauscher durch mindestens eine Steig- und eine Rückflussrohrleitung miteinander verbunden sind.

2. Friteuse nach Anspruch 1, dadurch gekennzeichnet, dass der beheizte erste Wärmeaustauscher, z.B. ein Dampferzeuger, als mindestens ein ungefähr horizontales Rohr und der wärmeabgebende zweite Wärmeaustauscher, z.B. ein Kondensator, als mindestens ein ungefähr vertikales Hohlwand- oder Rohrelement ausgebildet ist.

3. Friteuse nach mindestens einem der Ansprüche, dadurch gekennzeichnet, dass mindestens der vertikale Wärmeaustauscher mehrere parallelgeschaltete Rohre oder Hohlwandelemente aufweist.

4. Friteuse nach mindestens einem der Ansprüche, dadurch gekennzeichnet, dass die Vertikalrohre als Doppelmantelrohre ausgebildet sind, und das Oel innerhalb und um die Doppelmantelrohre, z.B. von unten nach oben strömt.

5. Friteuse nach mindestens einem der Ansprüche, dadurch gekennzeichnet, dass das ungefähr horizontale Rohr (20) als Doppelmantelrohr ausgebildet ist und das Medium (22) im Mantelraum (21) zwischen den Rohren des Doppelmantelrohres (20) und die Verbrennungs- und Rauchgase (43) durch und um das Rohr (20) strömen.

6. Friteuse nach mindestens einem der Ansprüche, gekennzeichnet durch einen, z.B. U-förmigen, Strömungseinsatz (15), welcher oben offen ist und in mindestens einer Seitenfläche Oeffnungen (17) aufweist und dessen tiefster, unterhalb den Oeffnungen (17) liegender Teil als Kaltöl-Wanne (12) wirkt.

7. Friteuse nach mindestens einem der Ansprüche, gekennzeichnet durch ein, in den Strömungseinsatz (15) einschiebbares, vorzugsweise sägezahnartig, gefaltetes Trennblech (51).

8. Friteuse nach mindestens einem der Ansrprüche, dadurch gekennzeichnet, dass sie durch ein einschiebbares, vorzugsweise sägezahnartig gefaltetes Trennblech (51) in zwei betriebsmässig praktisch voneinander getrennte Hälften unterteilbar ist.

FIG. 1

0083429

FIG. 2

0083429

FIG. 3

50

50

51

34

FIG. 4

FIG. 5

FIG. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-C- 489 559 (WILKES) * Insgesamt * | 1,2,5 | A 47 J 37/12 |
| A | DE-A-2 063 336 (NEFF) * Insgesamt * | 1 | |
| A | US-A-3 985 120 (LAZARIDIS) * Insgesamt * | 1 | |
| A | DE-C- 344 763 (HOLST) * Insgesamt * | 1,3 | |
| A | US-A-2 109 212 (EHRGOTT) * Seite 2, linke Spalte, Zeilen 15-49; Figuren 5,6 * | 7,8 | |
| D,A | DE-A-2 443 156 (SCHMID) | | |

RECHERCHIERTE SACHGEBIETE (Int. Cl. ³)

A 47 J

Der vorliegende Recherchenbericht wurde für alle Patentansprüche erstellt.

| Recherchenort DEN HAAG | Abschlußdatum der Recherche 22-03-1983 | Prüfer SCHARTZ J. |
|---|---|---|